Europäisches Patentamt

European Patent Office

Office européen des brevets

(19)

(11) Numéro de publication : **0 098 766**
**B1**

# (12) FASCICULE DE BREVET EUROPÉEN

(45) Date de publication du fascicule du brevet :
**05.03.86**

(21) Numéro de dépôt : **83401250.2**

(22) Date de dépôt : **17.06.83**

(51) Int. Cl.⁴ : **F 17 C 3/08**

(54) **Récipient à forte isolation thermique et son procédé de fabrication.**

(30) Priorité : **29.06.82 FR 8211344**

(43) Date de publication de la demande :
**18.01.84 Bulletin 84/03**

(45) Mention de la délivrance du brevet :
**05.03.86 Bulletin 86/10**

(84) Etats contractants désignés :
**DE FR IT SE**

(56) Documents cités :
**FR-A- 2 345 658**
**GB-A- 1 125 588**
**US-A- 3 101 862**

(73) Titulaire : **L'AIR LIQUIDE, SOCIETE ANONYME POUR
L'ETUDE ET L'EXPLOITATION DES PROCEDES
GEORGES CLAUDE
75, Quai d'Orsay
F-75321 Paris Cedex 07 (FR)**

(72) Inventeur : **Pelloux Gervais, Pierre
17, avenue de la Poste Seyssinet-Pariset
F-38170 Seyssins (FR)**
Inventeur : **Simon, Bernard
223, avenue de la Maréchale
F-94420 Le Plessis Trevise (FR)**

(74) Mandataire : **Jacobson, Claude et al
L'AIR LIQUIDE, SOCIETE ANONYME POUR L'ETUDE
ET L'EXPLOITATION DES PROCEDES GEORGES
CLAUDE 75, quai d'Orsay
F-75321 Paris Cedex 07 (FR)**

## Description

La présente invention concerne les récipients à forte isolation thermique du type à réservoir intérieur relié à un réservoir extérieur par collage d'un col allongé lisse.

Dans le cas de réservoirs cryogéniques légers et peu coûteux, on est souvent amené à utiliser des métaux tels que l'aluminium, et, afin d'obtenir des performances thermiques convenables, il est impératif de relier le réservoir extérieur au réservoir intérieur par un col très isolant qui ne peut être réalisé, le plus souvent, qu'en matière plastique. On connaît les difficultés de liaison entre de telles matières plastiques et l'aluminium et, pour assurer une jonction robuste, on a été amené à procéder à des opérations de sertissage du débouché des réservoirs intérieur et extérieur dans des gorges prévues à cet effet ménagées dans les deux extrémités du col en matière plastique, comme décrit par exemple dans le brevet GB 1 125 588. Pour former de telles gorges, le col en matière plastique doit être usiné, ce qui augmente considérablement le prix d'un tel assemblage. De plus, si ces méthodes de liaison permettent de réaliser un joint collé présentant de bonnes qualités d'étanchéité, par contre, en partie haute, c'est-à-dire à l'endroit du débouché du réservoir extérieur, on doit en pratique prévoir une bague de renfort du sertissage supérieur, ce qui accroît encore le prix.

Si l'on veut simplifier les modalités d'assemblage en évitant le sertissage entre le débouché des réservoirs et le col, ce qui permettrait d'utiliser des cols tubulaires lisses sans gorges de sertissage (voir par exemple FR-A-2 345 658), il se présente alors un inconvénient majeur, car l'étanchéité destinée à assurer la liaison du col au niveau du réservoir intérieur est fragile, même si cette fragilité est compensée au niveau du réservoir extérieur par un renfort annulaire.

La présente invention a pour objet un réservoir du type précité qui soit peu onéreux et fiable, aussi bien du point de vue de la résistance mécanique que du point de vue de l'étanchéité, et en particulier qui résiste très bien aux chocs et vibrations subis pendant le transport, grâce à une répartition convenable des contraintes mécaniques.

A cet effet, l'invention a pour objet un récipient du type précité, caractérisé en ce que chaque extrémité du col est reliée au réservoir correspondant par de la colle placée dans un espace interstitiel prévu entre ladite extrémité de col et un débouché tronconique dudit réservoir.

Grâce à cette modalité de réalisation, la colle vient combler en totalité deux cavités annulaires coniques ménagées entre les pièces assemblées, ce qui assure une bonne étanchéité. De plus, en prévoyant un faible jeu entre chaque extrémité de col et le débouché auquel il doit être lié, on forme ainsi un joint de haute résistance mécanique et l'épaisseur radiale variable de la jonction permet cependant une déformation très faible, mais suffisante entre le col et chaque débouché, évitant ainsi des contraintes de rupture au niveau des collages d'une part, et d'autre part amortissant les chocs grâce à des colles dont le module d'élasticité est relativement faible.

L'invention a également pour objet un procédé de fabrication d'un récipient tel que défini ci-dessus et dont le réservoir intérieur est d'une seule pièce et possède un débouché tronconique divergent vers l'extérieur, tandis que le réservoir extérieur est en deux parties, dont une partie supérieure présentant un débouché tronconique convergent vers l'extérieur. Ce procédé est caractérisé en ce que : le réservoir intérieur étant posé sur son fond, on colle une première extrémité du col dans le débouché tronconique du réservoir intérieur, la colle venant emplir l'espace interstitiel existant entre ladite première extrémité de col et ce débouché tronconique ; on place la partie supérieure du réservoir extérieur en appui inversé sur le débouché tronconique de ce réservoir, on introduit l'extrémité libre du col dans ce débouché, et on la colle à ce dernier, la colle venant emplir l'espace interstitiel existant entre eux ; et on fixe la pièce complémentaire formant la partie inférieure du réservoir extérieur sur la partie supérieure de ce réservoir.

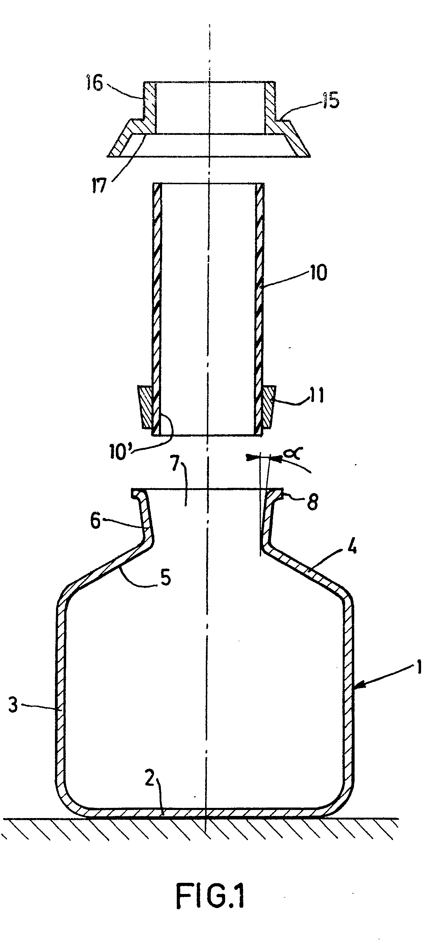

Les caractéristiques et avantages de l'invention ressortiront d'ailleurs de la description qui suit, en référence aux dessins annexés dans lesquels les figures 1 à 3 sont des vues en coupe verticale des trois étapes principales de la fabrication d'un réservoir à forte isolation thermique selon l'invention.

En se référant aux dessins annexés, on a préparé un réservoir intérieur 1 avec un fond 2, une paroi latérale cylindrique 3 et un couvercle 4 présentant une première partie tronconique convergente 5 suivie d'une seconde partie divergente 6 formant le débouché 7 et se terminant par un bord évasé vers l'extérieur 8.

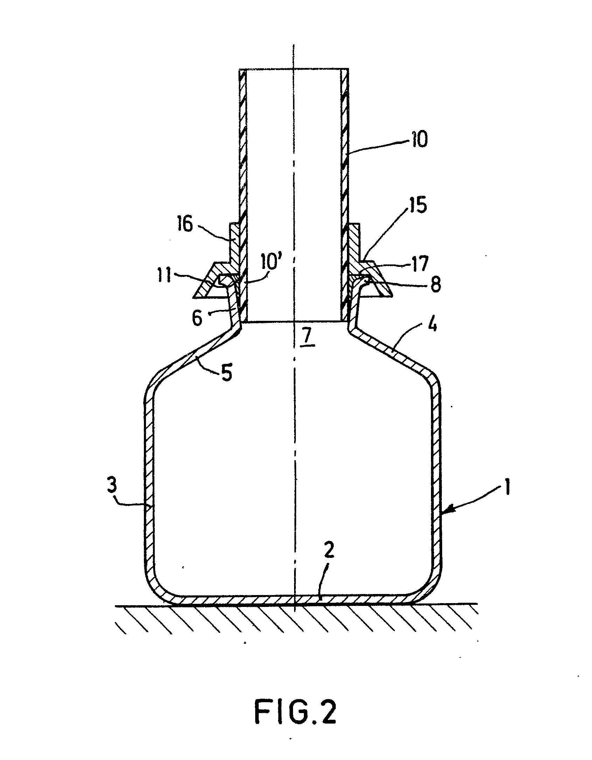

On a préparé également un col sous forme d'un tronçon tubulaire à paroi lisse de verre époxy 10 que l'on a enduit à sa partie inférieure d'un bourrelet de colle 11 et, conformément à la figure 2, on vient engager la partie inférieure 10' du col 10 dans le débouché 7 du réservoir 1, le tout étant dimensionné de façon que le bourrelet de colle 11 vienne emplir complètement la cavité interstitielle entre le débouché 7 et la partie 10' du col 10. La mise en forme définitive peut être assurée par une pièce de pression 15 présentant un moyeu 16 de coulissement le long et à l'extérieur du col 10 et un épaulement d'appui 17 destiné à répartir et comprimer la colle dans le dégagement interstitiel, après quoi l'on procède alors à l'opération de durcissement de la colle.

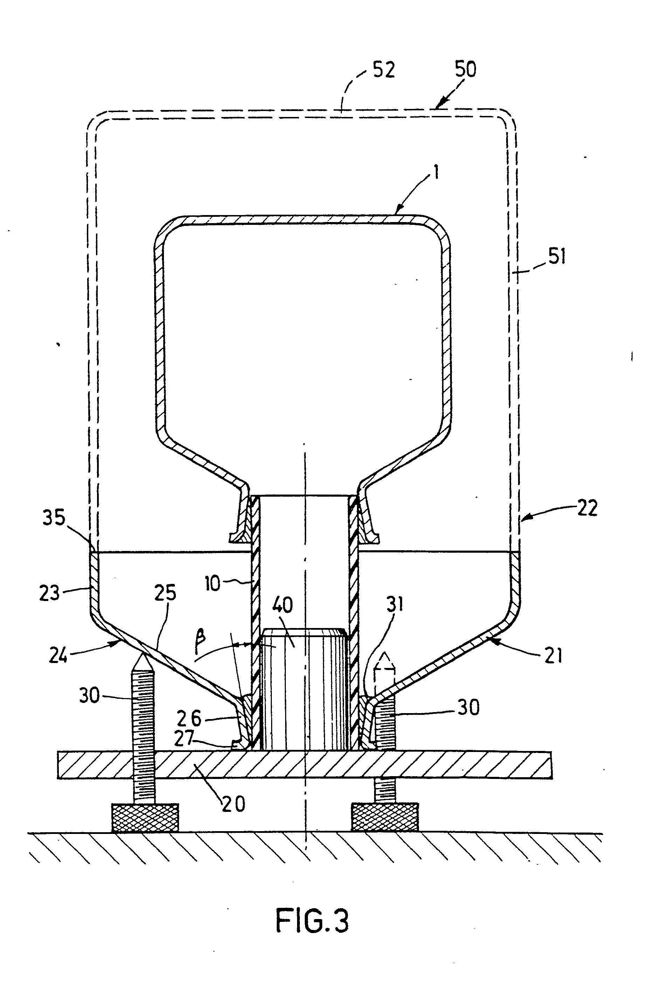

Une fois cette opération terminée, on dispose (figure 3) sur une table 20 une pièce en tôle emboutie 21 destinée à former la partie supérieure d'un réservoir externe 22 ; à cet effet, cette pièce emboutie 21 présente une partie cylindrique 23 et un couvercle 24 comprenant une partie tronconique convergente 25 suivie d'un débouché 26 également tronconique convergeant vers l'extérieur du débouché, mais à plus faible angle de convergence, se terminant par un rebord s'évasant vers l'extérieur 27. La pièce emboutie 21 repose sur la table 20 par appui du bord 27 du débouché 26, c'est-à-dire, en fait, avec l'extrémité supérieure du réservoir extérieur tournée vers le bas. Cette pièce emboutie 21 est maintenue en position correcte par trois étais-support 30 de hauteur réglable. Une fois cette pièce 21 en position ainsi assurée, le réservoir 1 équipé de son col 10 enduit d'un bourrelet de colle 31 à son extrémité libre est mis en position définitive par rapport à la pièce supérieure du réservoir externe 21, c'est-à-dire que l'on retourne cet ensemble réservoir intérieur 1-col 10, de façon à engager le col 10 dans le débouché 26 de la pièce 21, le positionnement correct étant assuré par un mandrin 40 solidaire de la table 20.

Dans cette position, comme dans celle qui avait été décrite précédemment, le bourrelet de colle 31 est alors durci, par exemple par polymérisation, ce qui assure la formation d'un ensemble intermédiaire solidarisé par collage tel qu'il est représenté en traits pleins à la figure 3, après quoi on peut souder ou coller une pièce complémentaire 50 du réservoir extérieur le long du bord supérieur 35 de la paroi 23, ce corps complémentaire 50 comportant une partie cylindrique 51 et un fond 52. Bien entendu, auparavant, on a placé, le cas échéant, autour du réservoir intérieur et autour du col, les couches multiples non représentées de matériaux isolants et réflecteurs destinés à obtenir, le cas échéant avec un vide ultérieurement établi dans l'espace interstitiel entre réservoir intérieur et réservoir extérieur, une isolation thermique de très haute qualité.

Une fois le réservoir ainsi élaboré, il suffit de le retirer du mandrin 40.

De préférence, l'angle de conicité divergent α entre le col et la partie divergeant vers l'extérieur 6 du débouché 7 du réservoir intérieur 1 est compris entre 3° et 15° et, avantageusement, entre 3° et 10° pour des hauteurs axiales de collage qui sont normales (pour des hauteurs axiales de collage relativement courtes, l'angle α peut être compris entre 10 et 15°). De même, l'angle β de conicité convergente entre le col et la partie tronconique convergeant vers l'extérieur du débouché 26 du réservoir extérieur 22 est compris dans une gamme angulaire telle que celle précisée plus haut en rapport avec l'angle α. La hauteur axiale selon l'axe des débouchés, c'est-à-dire selon l'axe du col, des parties divergente 6 et convergente 26, mesurée à partir du jeu radial minimal qu'elles forment avec le col 10, est comprise entre 10 et 30 mm, tandis que la longueur axiale au niveau du rebord d'extrémité 8 et 27 des débouchés est comprise entre 2 et 6 mm ; le jeu radial minimal entre col 10 et débouché 7 ou 26 est compris entre 0 et 0,5 mm.

L'invention s'applique à tous les réservoirs destinés à être dotés d'une forte isolation thermique, et est applicable aussi bien aux températures très basses qu'aux températures très élevées par rapport à la température ambiante.

Les modalités de collage décrites peuvent s'appliquer à des réservoirs en aluminium ou en acier inoxydable, alors que le col de liaison entre réservoirs peut être réalisé en résine, notamment en résine de verre époxy, en acier inoxydable, ou autres matériaux de faible conductibilité thermique (matériaux plastiques chargés ou non).

En variante, on peut inverser le sens de la conicité du débouché 7 et/ou du débouché 26. On conserve alors les propriétés mécaniques et d'étanchéité des deux joints collés, mais, bien entendu, le procédé de fabrication du récipient doit être adapté à chaque configuration, comme il apparaîtra à l'homme de l'art. En particulier, on réservera en pratique la convergence du débouché du réservoir intérieur aux cas où ce réservoir est en deux parties, pour des raisons évidentes de commodité du collage.

**Revendications**

1. Récipient à forte isolation thermique, du type à réservoir intérieur (1) relié à un réservoir extérieur (22) par collage d'un col allongé lisse (10), caractérisé en ce que chaque extrémité du col (10) est reliée au réservoir correspondant (1, 22) par de la colle placée dans un espace interstitiel prévu entre ladite extrémité de col et un débouché tronconique (7, 26) dudit réservoir.

2. Récipient selon la revendication 1, à réservoir intérieur (1) d'une seule pièce, caractérisé en ce que le débouché tronconique (7) de ce réservoir diverge vers l'extérieur du récipient.

3. Récipient selon l'une des revendications 1 et 2, caractérisé en ce que le débouché tronconique (26) du réservoir extérieur (22) converge vers l'extérieur du récipient.

4. Récipient selon l'une quelconque des revendications 1 à 3, caractérisé en ce que l'angle de convergence des débouchés tronconiques (7, 26) du réservoir intérieur (1) et du réservoir extérieur (22) est compris entre 3° et 15° et de préférence entre 3° et 10°.

5. Récipient selon l'une quelconque des revendications 1 à 4, caractérisé en ce que le jeu radial minimal entre col et débouché des réservoirs intérieur (1) et extérieur (22) est compris entre 0 et 0,5 mm.

6. Récipient selon l'une quelconque des revendications 1 à 5, caractérisé en ce que la hauteur axiale des débouchés depuis le jeu minimal qu'ils forment avec le col (10) est comprise entre 10 et 30 mm.

7. Récipient selon l'une quelconque des revendications 1 à 6, caractérisé en ce que les réservoirs (1, 22) sont réalisés en aluminium ou en acier inoxydable.

8. Récipient selon l'une quelconque des revendications 1 à 7, caractérisé en ce que le col de liaison (10) entre réservoirs est réalisé en un matériau de faible conductibilité thermique, notamment en résine de verre époxyde ou en acier inoxydable.

9. Procédé de fabrication d'un récipient à forte isolation thermique selon les revendications 1, 2 et 3 prises ensemble, ce récipient comportant un réservoir extérieur (22) en deux parties (21, 50), ce procédé étant caractérisé en ce que : le réservoir intérieur (1) étant posé sur son fond (2), on colle une première extrémité (10′) du col (10) dans le débouché tronconique (7) du réservoir intérieur (1), la colle venant emplir l'espace interstitiel existant entre ladite première extrémité de col (10′) et ce débouché tronconique (7) ; on place la partie supérieure (21) du réservoir extérieur (22) en appui inversé sur le débouché tronconique (26) de ce réservoir, on introduit l'extrémité libre du col dans ce débouché (26), et on la colle à ce dernier, la colle venant emplir l'espace interstitiel existant entre eux ; et on fixe la pièce complémentaire (50) formant la partie inférieure du réservoir extérieur (22) sur la partie supérieure (21) de ce réservoir.

10. Procédé selon la revendication 9, caractérisé en ce qu'on assure la mise en place définitive de la colle dans l'espace interstitiel entre le col (10) et le débouché (7) du réservoir intérieur (1) par une pièce de guidage (15-17) coulissant le long et à l'extérieur du col (10) et munie d'un épaulement d'appui (17).

**Claims**

1. Container having a high thermal insulation of the type having an interior reservoir (1) connected to an exterior reservoir (22) by adherence of an extended smooth neck (10), characterized by that each end of the neck (10) is connected to the corresponding reservoir (1, 22) through glue placed in an intermediate space provided between the said end of the neck and a frustoconical mouth (7, 26) of the said reservoir.

2. Container according to claim 1, having an interior reservoir (1) of a single piece, characterized by that the frustoconical mouth (7) of the said reservoir diverges to the exterior of the container.

3. Container according to one of the claims 1 and 2, characterized in that the frustoconical mouth (26) of the exterior reservoir (22) converges to the exterior of the container.

4. Container according to one of the claims 1 to 3, characterized in that the angle of convergence of the frustoconical mouths (7, 26) of the interior reservoir (1) and of the exterior reservoir (22) amounts to between 3° and 15° and preferably between 3° and 10°.

5. Container according to one of the claims 1 to 4, characterized in that the minimum radial clearance between the neck and the mouth of the interior (1) and exterior reservoirs (22) amounts to between 0 and 0,5 mm.

6. Container according to one of the claims 1 to 5, characterized in that the axial height of the mouths from the minimum clearance which they form with the neck (10), amounts to between 10 and 30 mm.

7. Container according to one of the claims 1 to 6, characterized by that the reservoirs (1, 22) are made from aluminium or inoxydisable steel.

8. Container according to one of the claims 1 to 7, characterized in that the joining neck (10) between reservoirs is made of a material of small thermal conductivity, especially epoxy glass resin or of inoxydisable steel.

9. Process for manufacturing a container having a high thermal insulation according to the claims 1, 2 and 3 taken together, the container comprising an exterior reservoir (22) in two parts (21, 50) the process being characterized in that : the interior reservoir (1) being positioned on its bottom (2) one adheres a first end (10′) of the neck (10) in the frustoconical mouth (7) of the interior reservoir (1), the neck filling up the intermediate space existing between the said first end of the neck (10′) and this frustoconical mouth (7) ; one positions the upper part (21) of the exterior reservoir (22) inversely supported on the frustoconical mouth (26) of the said reservoir, one introduces the free end of the neck into the said mouth (26), and one glues it to the latter, the glue filling up the intermediate space existing between those two ; and one fixes the complementary piece (50) forming the lower part of the exterior reservoir (22) on the upper part (21) of this reservoir.

10. Process according to claim 9, characterized by that one assures the definite position of the glue in the intermediate space between the neck (10) and the mouth (7) of the interior reservoir (1) by a guiding piece (15-17), sliding lengthwise and at the exterior of the neck (10) and provided with a joining piece (17).

**Patentansprüche**

1. Behälter mit verstärkter Wärmeisolierung mit einem Innengefäß (1), das durch Verkleben eines glatten, verlängerten Kragens (10) mit einem Außengefäß (22) verbunden ist, dadurch gekennzeichnet, daß jedes Ende des Kragens (10) mit dem entsprechenden Gefäß (1, 22) durch Klebstoff verbunden ist, der in einem Zwischenraum angeordnet ist, welcher zwischen dem Ende des Kragens und einer kegelstumpfförmigen Ausmündung (7, 26) des Gefäßes vorgesehen ist.

2. Behälter nach Anspruch 1, mit Innengefäß (1) aus nur einem Stück, dadurch gekennzeichnet, daß die kegelstumpfförmige Ausmündung (7) des Gefäßes nach außerhalb des Behälters divergiert.

3. Behälter nach einem der Ansprüche 1 und 2, dadurch gekennzeichnet, daß die kegelstumpfförmige Ausmündung (26) des Außengefäßes (22) nach außerhalb des Behälters konvergiert.

4. Behälter nach einem der Ansprüche 1 bis 3, dadurch gekennzeichnet, daß der Konvergenzwinkel der kegelstumpfförmigen Ausmündungen (7, 26) des Innengefäßes (1) und des Außengefäßes (22) zwischen 3° und 15° und vorzugsweise zwischen 3° und 10° beträgt.

5. Behälter nach einem der Ansprüche 1 bis 4, dadurch gekennzeichnet, daß das minimale radiale Spiel zwischen dem Kragen und der Ausmündung des Innengefäßes (1) und des Außengefäßes (22) zwischen 0 und 0,5 mm beträgt.

6. Behälter nach einem der Ansprüche 1 bis 5, dadurch gekennzeichnet, daß die axiale Höhe der Ausmündungen von dem minimalen Spiel, welches sie mit dem Kragen (10) bilden, zwischen 10 und 30 mm beträgt.

7. Behälter nach einem der Ansprüche 1 bis 6, dadurch gekennzeichnet, daß die Gefäße (1, 22) aus Aluminium oder nicht oxidierbarem Stahl bestehen.

8. Behälter nach einem der Ansprüche 1 bis 7, dadurch gekennzeichnet, daß der Verbindungskragen (10) zwischen den Gefäßen aus einem Material geringer Wärmeleitfähigkeit besteht, insbesondere aus Epoxyglasharz oder nicht oxidierbarem Stahl.

9. Verfahren zur Herstellung eines Behälters mit verstärkter Wärmeisolierung nach den Ansprüchen 1, 2 und 3 zusammengenommen, wobei der Behälter ein Außengefäß (22) aus zwei Teilen (21, 50) aufweist, dadurch gekennzeichnet, daß : das Innengefäß (1) auf seinem Boden (2) steht, man ein erstes Ende (10') des Kragens (10) in die kegelstumpfförmige Ausmündung (7) des Innengefäßes (1) klebt, der Klebstoff den Zwischenraum ausfüllt, der zwischen dem ersten Ende des Kragens (10') und dieser kegelstumpfförmigen Ausmündung (7) besteht ; man den oberen Teil (21) des äußeren Gefäßes (22) umgekehrt abgestützt auf der kegelstumpfförmigen Ausmündung (26) dieses Gefäßes anordnet, man das freie Ende des Kragens in diese Ausmündung (26) einführt und man es an die Ausmündung klebt, wobei der Klebstoff den Zwischenraum, der zwischen diesen beiden besteht, ausfüllt ; und man das komplementäre Werkstück (50), welches den unteren Teil des Außengefäßes (22) bildet, auf dem oberen Teil (21) dieses Gefäßes befestigt.

10. Verfahren nach Anspruch 9, dadurch gekennzeichnet, daß man das letztliche Anordnen des Klebstoffes im Zwischenraum zwischen dem Kragen (10) und der Ausnehmung (7) des Innengefäßes (1) durch ein Führungsstück (15-17) sicherstellt, welches längs und außerhalb des Kragens (10) verschiebbar ist und mit einem Stützansatz (17) versehen ist.

FIG.1

FIG.2

FIG.3